# FASCICULE DE BREVET EUROPEEN

(11) **EP 3 875 788 B1**
(45) Date de publication et mention de la délivrance du brevet: **10.08.2022**
(21) Numéro de dépôt: 21159032.8
(22) Date de dépôt: 24.02.2021
(51) Int. Cl.: F16B 21/07, F16B 19/10, E05F 5/02

(54) **ASSEMBLAGE D'UNE PIECE SUR UN ELEMENT CREUX DE FAIBLE EPAISSEUR**
MONTAGE EINES BAUTEILS AUF EINEM HOHLELEMENT GERINGER DICKE
ASSEMBLY OF A PART ON A THIN HOLLOW ELEMENT

(30) Priorité: 10.03.2020 FR 2002337
(43) Date de publication de la demande: 08.09.2021
(73) Titulaire: Renault s.a.s, 92100 Boulogne Billancourt (FR)
(72) Inventeur: DAGOREAU, Alain, 91410 Dourdan (FR); DORAZIL, Christophe, 75002 Paris (FR); MARCEAU, Thierry, 92500 rueil malmaison (FR); SIMON, David, 77515 POMMEUSE (FR)
(74) Mandataire: Renault Group

(56) Documents cités:
- WO-A1-97/19271
- DE-A1- 2 016 099
- DE-C1- 3 731 263
- DE-U- 7 036 050
- US-A1- 2018 291 667

## Description

### Domaine technique

La présente invention concerne le domaine des assemblages entre deux pièces. L'invention se rapporte plus particulièrement à un assemblage d'une pièce sur un élément creux de faible épaisseur.

### Techniques antérieures

De très nombreux modes d'assemblage sont aujourd'hui connus pour assembler une pièce sur un élément creux. Le domaine des carrosseries de véhicules automobile regorge également de solutions techniques pour assurer de telles fixations, voir par exemple le document DE 37 31 263 C1.

### Exposé de l'invention

Le but de la présente invention est de proposer une solution d'assemblage invisible de l'extérieur, particulièrement astucieuse pour fixer une pièce sur un élément creux, ce dernier étant typiquement de faible épaisseur, c'est-à-dire pourvu de deux parois sensiblement parallèles distantes l'une de l'autre d'une faible dimension au regard des autres dimensions des parois.

A cet effet, l'invention a pour objet un assemblage d'une pièce sur un élément creux, ce dernier comportant une première paroi et une deuxième paroi sensiblement parallèles, caractérisé en ce que la pièce comporte au moins une excroissance cylindrique en matériau souple, renfermant un évidement de réception d'un pion de clippage, le pion étant réalisé dans un matériau rigide relativement au matériau souple de l'excroissance, l'assemblage étant transformable entre d'une part une configuration initiale dans laquelle l'excroissance et le pion partiellement engagé dans l'évidement sont insérés dans un orifice de la première paroi et d'autre part une configuration finale dans laquelle le pion est complètement engagé dans l'évidement sous l'influence de la poussée exercée par la deuxième paroi sur le pion lors de l'insertion de l'excroissance dans l'orifice, l'engagement complet du pion dans l'évidement provoquant une dilatation radiale de l'excroissance assurant son accrochage sur le bord périphérique de l'orifice de la première paroi.

D'autres caractéristiques avantageuses de l'invention sont définies ci-après.

Le pion comporte un corps principal destiné à être inséré dans l'évidement de l'excroissance, ainsi qu'une tête à bord élargi par rapport au corps principal, la tête étant destinée à coopérer en butée contre une face annulaire de l'excroissance formant un bord de l'évidement.

Le corps principal du pion comporte au moins un relief périphérique, notamment deux dentures annulaires destinées à être insérées dans deux encoches complémentaires conformées dans l'évidement de l'excroissance.

Le corps principal du pion a une forme de révolution dont la dimension radiale varie globalement de façon décroissance entre la tête du pion et un bord libre opposé du pion.

Le corps principal du pion a une forme générale tronconique.

L'excroissance comporte une collerette extérieure renforçant l'accrochage de l'excroissance sur le bord périphérique de l'orifice.

L'écart entre la première paroi et la deuxième paroi est compris entre 3 et 20 mm.

L'invention a également pour objet une pièce de carrosserie, notamment une porte battante, d'un véhicule automobile comprenant une partie creuse délimitée par une première paroi et une seconde paroi sensiblement parallèles, caractérisé en ce qu'elle comprend un élément de protection fixé à la pièce de carrosserie par un assemblage ayant tout ou partie des caractéristiques précédentes, l'élément de protection comprenant au moins une excroissance dans laquelle est engagé un pion de clippage correspondant dans la configuration finale.

L'invention a également pour objet un véhicule automobile caractérisé en ce qu'il comprend une pièce de carrosserie du type précédent, la pièce de carrosserie étant une première des deux portes battantes arrière du véhicule, l'élément de protection étant un patin situé sur une face intérieure d'une partie haute de la première porte battante, dans une zone formant un retour vers l'avant du véhicule, cette zone étant susceptible d'être atteinte par la deuxième porte battante lorsque la première porte battante n'est pas complètement fermée.

L'invention a encore pour objet un procédé de mise en place d'un assemblage d'une pièce sur un élément creux, ce dernier comportant une première paroi et une deuxième paroi sensiblement parallèles, la pièce comportant au moins une excroissance cylindrique en matériau souple, renfermant un évidement de réception d'un pion de clippage, le pion étant réalisé dans un matériau rigide relativement au matériau souple de l'excroissance, la mise en place de l'assemblage comprenant les étapes successives suivantes :
- engagement partiel du pion dans l'évidement de l'excroissance
- insertion de l'excroissance et du pion dans un orifice de la première paroi
- engagement complet du pion dans l'évidement sous l'influence de la poussée exercée par la deuxième paroi sur le pion lors de l'insertion de l'excroissance dans l'orifice, cet engagement complet du pion provoquant une dilatation radiale de l'excroissance assurant son accrochage sur le bord périphérique de l'orifice de la première paroi.

L'invention sera mieux comprise à la lecture de la description suivante d'un exemple non limitatif de l'invention, et à la lumière des dessins annexés.
[Fig. 1], [Fig. 2], [Fig. 3] et [Fig. 4] sont des vues en sections transversales illustrant différentes étapes de fixation d'une pièce sur un corps creux afin d'obtenir un assemblage selon l'invention.
[Fig. 5] est une vue intérieure partielle en perspective de deux portes battantes arrière d'un véhicule automobile, illustrant la zone haute dans laquelle il existe un risque de conflit entre les deux portes lorsque la première des portes n'est pas complètement fermée.
[Fig. 6] et [Fig. 7] sont des vues partielles en perspective illustrant un patin de protection constituant la pièce à fixer sur une première des portes battantes, selon l'assemblage de l'invention.
[Fig. 8] illustre la zone de la première porte battante pourvue d'orifice de fixation destinés à recevoir des excroissances prévues sur le patin de protection.
[Fig. 9], [Fig. 10] et [Fig. 11] représentent des vues en perspective de la pièce à fixer sur le corps creux selon l'assemblage de l'invention, laquelle comporte ici deux excroissances recevant chacun un pion de clippage.

L'expression « sensiblement » signifie qu'un léger écart est admis dans le cadre de l'invention par rapport à une valeur nominale déterminée.

### Présentation générale de l'assemblage selon l'invention.

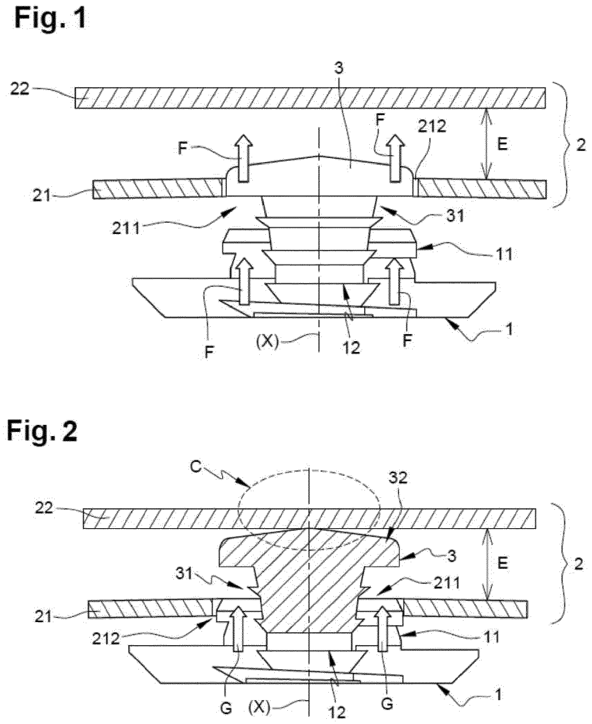

On a représenté aux figures 1 à 4 un assemblage d'une pièce 1 sur un élément creux 2. L'élément creux 2 comporte une première paroi 21 et une deuxième paroi 22 sensiblement parallèles. L'élément creux 2 est de faible épaisseur en ce sens que la dimension E mesurée entre les parois 21, 22 et perpendiculairement à celles-ci est faible ou réduite au regard des autres dimensions de ces parois. On parlera également de corps creux de faible profondeur.

Dans le cas illustré, cette dimension E est typiquement comprise entre 3 et 20 mm, étant entendu que l'invention peut s'appliquer selon le même principe à des éléments creux de plus grandes dimensions.

Selon l'invention, la pièce 1 comporte au moins une excroissance 11 cylindrique en matériau souple. L'excroissance 11 renferme un évidement 12 de réception d'un pion 3 de clippage. Le pion 3 est réalisé dans un matériau rigide relativement au matériau souple de l'excroissance. La pièce 1 et son excroissance 11 peuvent être d'un seul et unique matériau venu d'injection. Dans une variante de réalisation, l'excroissance peut être réalisée dans un matériau souple distinct du matériau de la pièce 1, et être associé à ce dernier par exemple par surmoulage.

L'excroissance 11, l'évidement 12 et le pion 3 ont des formes de révolution autour d'un même axe longitudinal X, que le pion 3 soit partiellement ou complètement engagé dans l'évidement 12

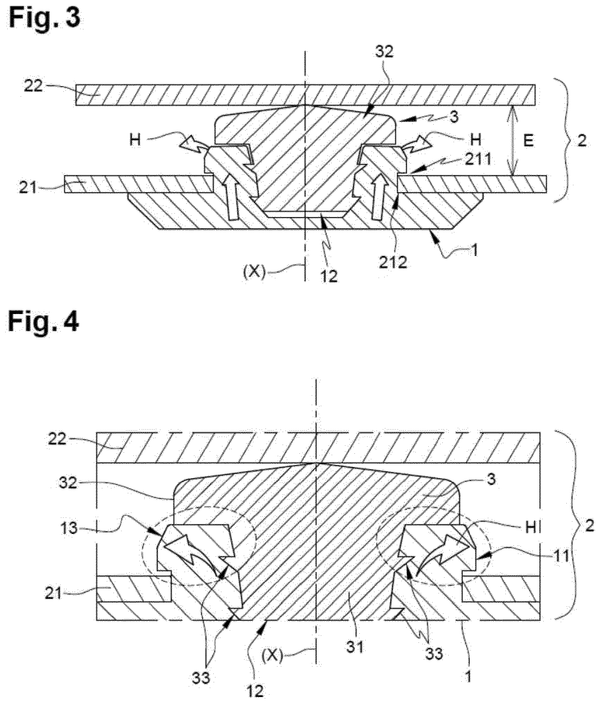

Selon l'invention, l'assemblage est transformable entre deux configurations : dans une configuration initiale représenté à la figure 1, l'excroissance 11 et le pion 3 partiellement engagé faisant office de pré-centreur dans l'évidement 12 sont insérés dans un orifice 211 de la première paroi 21. Dans une configuration finale représentée à la figure 3, le pion 3 est complètement engagé dans l'évidement 12 sous l'influence de la poussée exercée par la deuxième paroi 22 sur le pion 3 lors de l'insertion de l'excroissance 11 dans l'orifice 211. L'excroissance 11 embarque en effet le pion 3 lors de l'insertion dans l'orifice 211 suivant les flèches F. Cette insertion de l'excroissance 11 est réalisée jusqu'à assurer un contact entre le pion 3 et une face interne de la deuxième paroi 22, comme illustré dans la zone C à la figure 2. La deuxième paroi 22 assure une fonction de butée pour le pion 3. A ce stade, le pion 3 est encore partiellement engagé dans l'évidement 12. La pièce 1 est rapprochée davantage de la première paroi 21 de façon à insérer davantage l'excroissance 11 dans l'orifice 211. La deuxième paroi 22 limitant la course du pion 3 à l'intérieur de l'élément creux 2, le pion 3 s'engage alors dans l'évidement 12 à mesure que l'insertion de l'excroissance 11 se poursuit suivant la flèche G dans l'orifice 211 de la première paroi 21 (figure 2).

Selon un aspect essentiel de l'invention, l'engagement complet du pion 3 dans l'évidement 12 provoque une dilatation radiale suivant les flèches H de l'excroissance 11 (figures 3 et 4) en repoussant latéralement la matière souple de l'excroissance 11. On peut assimiler ce phénomène à un écrasement des parois latérales de l'excroissance 11 vers l'extérieur. Cet effet assure l'accrochage de l'excroissance 11 sur le bord périphérique 212 de l'orifice 211 de la première paroi 21.

En référence à la figure 4, le pion 3 comporte un corps principal 31 destiné à être inséré dans l'évidement 12 de l'excroissance 11. Le pion 3 comporte également une tête 32 à bord élargi par rapport au corps principal 31. La tête 32 est destinée à coopérer en butée contre une face annulaire de l'excroissance 11. Cette face annulaire forme un bord de l'évidement 12, disposé en vis-à-vis de la deuxième paroi 22.

Comme on le voit par exemple à la figure 4, le corps principal 31 du pion 3 comporte au moins un relief périphérique, notamment deux dentures 33 annulaires destinées à être insérées dans deux encoches complémentaires conformées dans l'évidement 12 de l'excroissance 11.

Ces dentures 33 et encoches complémentaires dans l'évidement 12 assurent un effet de crantage sécurisant la fixation en empêchant le déplacement du pion 3 dans le sens inverse. Ce type de pion est parfois désigné « pion sapin ».

Le corps principal 31 du pion 3 a une forme de révolution dont la dimension radiale à varie globalement de façon décroissance entre la tête 32 du pion 3 et un bord libre opposé du pion 3. Ce bord libre est tourné à l'opposé de la deuxième paroi 22. Par « globalement » on entend que la variation du diamètre est ici considérée en faisant abstraction des reliefs ponctuels formés par les dentures 33. Dans l'exemple illustré, le corps principal 31 du pion 3 a une forme générale tronconique.

L'excroissance 11 comporte à son sommet une collerette 13 débordant radialement par rapport la base de l'excroissance 11. Cette collerette 13 est destinée à traverser totalement l'orifice 211 de la première paroi 21, afin de renforcer l'accrochage de l'excroissance 11 sur le bord périphérique 212 de l'orifice 211.

Le procédé de mise en place de l'assemblage de la pièce 1 sur l'élément creux 2 comportant une première paroi 21 et une deuxième paroi 22 sensiblement parallèles comprend les étapes successives suivantes :
- engagement partiel du pion 3 dans l'évidement 12 de l'excroissance 11
- insertion de l'excroissance 11 et du pion 3 dans un orifice 211 de la première paroi 21
- engagement complet du pion 3 dans l'évidement 12 sous l'influence de la poussée exercée par la deuxième paroi 22 sur le pion 3 lors de l'insertion de l'excroissance 11 dans l'orifice 211. Cet engagement complet du pion 3 provoque une dilatation radiale de l'excroissance 11 assurant son accrochage sur le bord périphérique 212 de l'orifice 211 de la première paroi 21.

L'assemblage de l'invention décrit précédemment peut avoir de multiples applications. Nous illustrerons ci-après un exemple particulier d'application qui a fait naitre ce besoin.

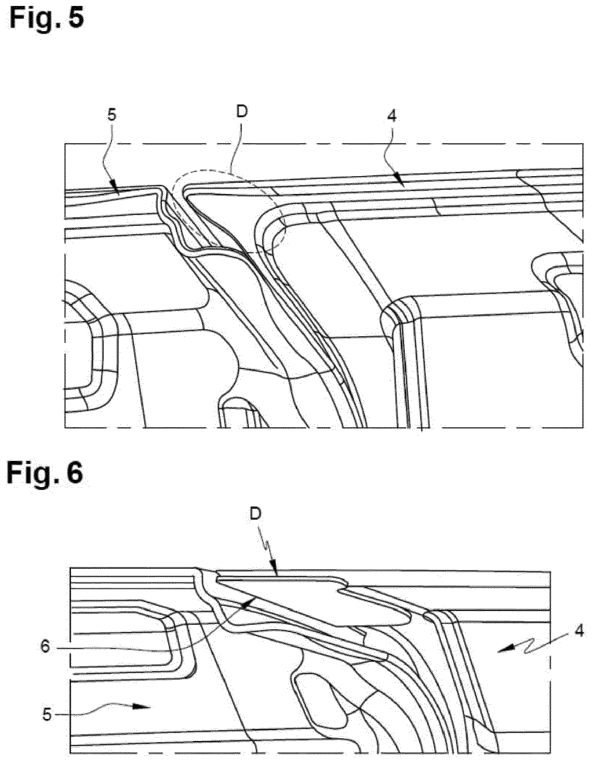

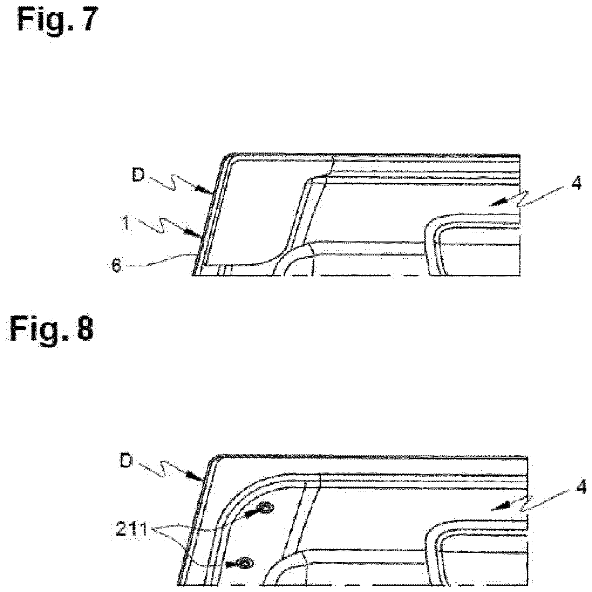

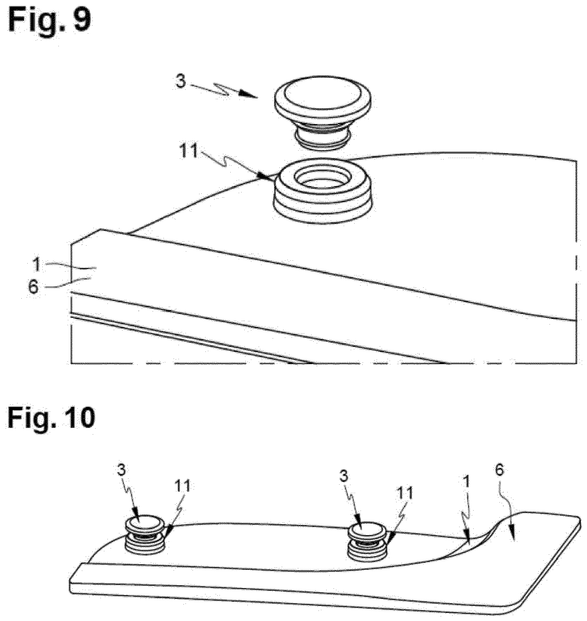

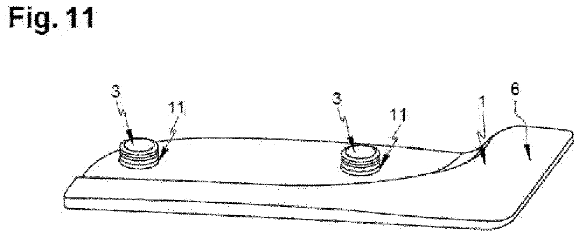

Dans le cas d'un véhicule automobile utilitaire pourvu de deux portes battantes arrière (portes antagonistes à charnières verticales), l'ordre de fermeture des portes est imposé. En référence à la figure 5, une première porte 4 (dite « porte esclave » doit être fermée avant la deuxième porte 5 (dite « porte maitresse » afin d'assurer le recouvrement et le verrouillage adéquats des portes 4, 5 sur la carrosserie du véhicule. Un problème apparaît lorsque la première 4 des portes à fermer est imparfaitement fermée. La deuxième porte 5 peut, dans une partie haute, entrer en conflit avec la première porte 4. Ces parties hautes forment des retours vers l'avant du véhicule dans l'exemple illustré aux figures 5 à 8. Dans cet exemple, un élément de protection 6 est adapté sur la zone D de la première porte 4 susceptible d'être accostée par la deuxième porte 5 (figure 5). Cet élément constitue ici un patin de protection. Ce patin à une forme relativement plate. La zone D de la première porte 4 sur laquelle le patin est appliqué est une zone creuse d'épaisseur réduite, comprenant une première paroi intérieure (typiquement un élément de tôle appelé « doublure ») et une deuxième paroi extérieure (typiquement un élément de tôle formant la peau extérieure de la porte). L'élément de protection 1, 6 comprend au moins une excroissance 11 dans laquelle est engagé un pion 3 de clippage. Dans l'exemple illustré aux figures 6 à 11, deux excroissances 11 sont prévues sur la face de l'élément 1, 6 qui est destinée à venir au contact de la zone D. Dans cet exemple illustré sur les figures 7 et 9 à 11, l'élément de protection porte à la fois la référence 1 (comme pièce à fixer) et la référence 6 (dans son application particulière à un élément de protection). La figure 10 représente l'élément de protection 1, 6 avec deux pions 3 partiellement engagés dans les évidements respectifs des deux excroissances 11. Les pions 3 sont de ce fait pré-maintenus sur la pièce 1, 6, ce qui permet au monteur de ne pas se préoccuper des fixations lorsque l'élément de protection 1, 6 est mis en place sur la porte 4. La figure 11 représente l'élément de protection 1, 6 avec les deux pions 3 complètement engagés dans les évidements respectifs des deux excroissances 11. Bien entendu cette configuration finale est obtenue lors de l'insertion des excroissance 11 et des pions 3 associés dans les orifices 211 de l'élément creux, ici constitué par la première porte 4 (figure 8). Les pions 3 s'engagent complètement dans les évidements par la contre-poussée exercée par la deuxième paroi de l'élément creux 2, ici constitué par la porte 4, lorsque l'élément de protection est pressé contre la porte 4.

*Avantages de l'invention.*
- des moyens de fixation simples et peu onéreux, mettant à profit la structure creuse de l'un des éléments à fixer
- un montage à l'aveugle de la pièce à fixer dès lors que les pions sont pré-engagés dans leurs évidements respectifs. Les pions assurent de ce fait une fonction de pré-centrage. Le monteur n'a à se préoccuper que du placement approprié de la pièce à fixer par rapport à l'élément creux, les excroissances devant alors se trouver automatiquement en face des orifices de l'éléments creux. Des repères visuels ou détrompeurs peuvent être prévus sur la pièce et/ou sur l'élément creux pour garantir le placement correct de la pièce sur celui-ci.
- du fait de l'expansion de la matière souple par la dilatation radiale de l'excroissance, l'invention permet d'assurer l'étanchéité du corps creux.
- dans le cas d'un collage complémentaire au type de fixation cité ci-dessus pour le patin sur la surface de la première paroi, ce type de fixation permet d'éviter l'utilisation d'un moyen de montage dans la mesure où les excroissances comportant des pions pré-clippés feront office de pré-centreurs ; cette fonction de pré-centrage évite tout collage intempestif tant que les pions ne seront pas entièrement engagés dans les excroissances.
- on note que les évidements peuvent ne pas être débouchant sur la pièce à fixer, ce qui rend les moyens de fixation invisibles une fois l'assemblage réalisé.

## Revendications

1. Assemblage d'une pièce (1) sur un élément creux (2), ce dernier comportant une première paroi (21) et une deuxième paroi (22) sensiblement parallèles, **caractérisé en ce que** la pièce (1) comporte au moins une excroissance (11) cylindrique en matériau souple, renfermant un évidement (12) de réception d'un pion (3) de clippage, le pion (3) étant réalisé dans un matériau rigide relativement au matériau souple de l'excroissance (11), l'assemblage étant transformable entre d'une part une configuration initiale dans laquelle l'excroissance (11) et le pion (3) partiellement engagé dans l'évidement (12) sont insérés dans un orifice (211) de la première paroi (21) et d'autre part une configuration finale dans laquelle le pion (3) est complètement engagé dans l'évidement (211) sous l'influence de la poussée exercée par la deuxième paroi (22) sur le pion (3) lors de l'insertion de l'excroissance (11) dans l'orifice (211), l'engagement complet du pion (3) dans l'évidement (12) provoquant une dilatation radiale de l'excroissance (11) assurant son accrochage sur le bord périphérique (212) de l'orifice (211) de la première paroi (21).

2. Assemblage selon la revendication 1, **caractérisé en ce que** le pion (3) comporte un corps principal (31) destiné à être inséré dans l'évidement (12) de l'excroissance (11), ainsi qu'une tête (32) à bord élargi par rapport au corps principal (31), la tête (32) étant destinée à coopérer en butée contre une face annulaire de l'excroissance (11) formant un bord de l'évidement (12).

3. Assemblage selon la revendication 2, **caractérisé en ce que** le corps principal (31) du pion (3) comporte au moins un relief périphérique (33), notamment deux dentures annulaires destinées à être insérées dans deux encoches complémentaires conformées dans l'évidement (12) de l'excroissance (11).

4. Assemblage selon la revendication 2 ou 3, **caractérisé en ce que** le corps principal (31) du pion (3) a une forme de révolution dont la dimension radiale varie globalement de façon décroissance entre la tête (32) du pion (3) et un bord libre opposé du pion (3).

5. Assemblage selon la revendication précédentes, **caractérisé en ce que** le corps principal (31) du pion (3) a une forme générale tronconique.

6. Assemblage selon l'une quelconque des revendications précédentes, **caractérisé en ce que** l'excroissance (11) comporte une collerette (13) extérieure renforçant l'accrochage de l'excroissance (11) sur le bord périphérique (212) de l'orifice (211).

7. Assemblage selon l'une quelconque des revendications précédentes, **caractérisé en ce que** l'écart (E) entre la première paroi (21) et la deuxième paroi (22) est compris entre 3 et 20 mm.

8. Pièce de carrosserie, notamment une porte (4) battante, d'un véhicule automobile comprenant une partie creuse délimitée par une première paroi et une seconde paroi sensiblement parallèles, **caractérisé en ce qu'**elle comprend un élément de protection (1, 6) fixé à la pièce de carrosserie par un assemblage selon l'une quelconque des revendications précédentes, l'élément de protection comprenant au moins une excroissance (11) dans laquelle est engagé un pion (3) de clippage correspondant dans la configuration finale.

9. Véhicule automobile **caractérisé en ce qu'**il comprend une pièce de carrosserie selon la revendication 8, la pièce de carrosserie étant une première (4) des deux portes battantes (4, 5) arrière du véhicule, l'élément de protection (1, 6) étant un patin situé sur une face intérieure d'une partie haute de la première porte battante (4), dans une zone formant un retour vers l'avant du véhicule, cette zone étant susceptible d'être atteinte par la deuxième porte battante (5) lorsque la première porte battante (4) n'est pas complètement fermée.

10. Procédé de mise en place d'un assemblage d'une pièce (1) sur un élément creux (2), ce dernier comportant une première paroi (21) et une deuxième paroi (22) sensiblement parallèles, la pièce(1) comportant au moins une excroissance (11) cylindrique en matériau souple, renfermant un évidement (12) de réception d'un pion (3) de clippage, le pion (3) étant réalisé dans un matériau rigide relativement au matériau souple de l'excroissance (11), la mise en place de l'assemblage comprenant les étapes successives suivantes :
- engagement partiel du pion (3) dans l'évidement (12) de l'excroissance (11)
- insertion de l'excroissance (11) et du pion (3) dans un orifice (211) de la première paroi (21)
- engagement complet du pion (3) dans l'évidement (12) sous l'influence de la poussée exercée par la deuxième paroi (22) sur le pion (3) lors de l'insertion de l'excroissance (11) dans l'orifice (211), cet engagement complet du pion (3) provoquant une dilatation radiale de l'excroissance (11) assurant son accrochage sur le bord périphérique (212) de l'orifice (211) de la première paroi (21).

## Patentansprüche

1. Anordnung eines Teils (1) an einem hohlen Element (2), wobei Letzteres eine erste Wand (21) und eine zweite Wand (22) aufweist, die im Wesentlichen parallel sind, **dadurch gekennzeichnet, dass** das Teil (1) mindestens einen zylindrischen Vorsprung (11) aus flexiblem Material aufweist, der eine Aussparung (12) zur Aufnahme eines Einrastzapfens (3) umschließt, wobei der Zapfen (3) aus einem im Vergleich zu dem flexiblen Material des Vorsprungs (11) starren Material ausgeführt ist, wobei die Anordnung zwischen einerseits einer Ausgangskonfiguration, in der der Vorsprung (11) und der teilweise in der Aussparung (12) in Eingriff genommene Zapfen (3) in einer Öffnung (211) der ersten Wand (21) eingeführt sind, und andererseits einer Endkonfiguration umwandelbar ist, in der der Zapfen (3) unter dem Einfluss des während des Einführens des Vorsprungs (11) in die Öffnung (211) von der zweiten Wand (22) auf den Zapfen (3) ausgeübten Schubs vollständig in der Aussparung (211) in Eingriff genommen ist, wobei der vollständige Eingriff des Zapfens (3) in der Aussparung (12) eine radiale Dehnung des Vorsprungs (11) hervorruft, die sein Einhängen an dem Umfangsrand (212) der Öffnung (211) der ersten Wand (21) sicherstellt.

2. Anordnung nach Anspruch 1, **dadurch gekennzeichnet, dass** der Zapfen (3) einen Hauptkörper (31), der zum Einführen in die Aussparung (12) des Vorsprungs (11) bestimmt ist, und einen Kopf (32) mit einem bezüglich des Hauptkörpers (31) verbreiterten Rand aufweist, wobei der Kopf (32) dazu bestimmt ist, in Anlage mit einer ringförmigen Fläche des Vorsprungs (11) zusammenzuwirken, die einen Rand der Aussparung (12) bildet.

3. Anordnung nach Anspruch 2, **dadurch gekennzeichnet, dass** der Hauptkörper (31) des Zapfens (3) mindestens eine Umfangserhöhung (33), insbesondere zwei ringförmige Zähne aufweist, die zum Einführen in zwei in der Aussparung (12) des Vorsprungs (11) ausgebildete komplementäre Kerben bestimmt sind.

4. Anordnung nach Anspruch 2 oder 3, **dadurch gekennzeichnet, dass** der Hauptkörper (31) des Zapfens (3) eine Rotationsform hat, deren radiale Abmessung zwischen dem Kopf (32) des Zapfens (3) und einem freien gegenüberliegenden Rand des Zapfens (3) allgemein abnimmt.

5. Anordnung nach dem vorhergehenden Anspruch, **dadurch gekennzeichnet, dass** der Hauptkörper (31) des Zapfens (3) eine allgemein kegelstumpfförmige Form hat.

6. Anordnung nach einem der vorhergehenden Ansprüche, **dadurch gekennzeichnet, dass** der Vorsprung (11) einen äußeren Flansch (13) aufweist, der das Einhängen des Vorsprungs (11) an dem Umfangsrand (212) der Öffnung (211) verstärkt.

7. Anordnung nach einem der vorhergehenden Ansprüche, **dadurch gekennzeichnet, dass** der Abstand (E) zwischen der ersten Wnd (21) und der zweiten Wand (22) zwischen 3 und 20 mm beträgt.

8. Karosserieteil, insbesondere eine Schwenktür (4), eines Kraftfahrzeugs, das einen hohlen Abschnitt umfasst, der von einer ersten Wand und einer zweiten Wand, die im Wesentlichen parallel sind, begrenzt ist, **dadurch gekennzeichnet, dass** es ein Schutzelement (1, 6) umfasst, das mittels einer Anordnung nach einem der vorhergehenden Ansprüche an dem Karosserieteil befestigt ist, wobei das Schutzelement mindestens einen Vorsprung (11) umfasst, in dem in der Endkonfiguration ein entsprechende Einrastzapfen (3) in Eingriff steht.

9. Kraftfahrzeug, **dadurch gekennzeichnet, dass** es ein Karosserieteil nach Anspruch 8 umfasst, wobei das Karosserieteil eine erste (4) von zwei hinteren Schwenktüren (4, 5) des Fahrzeugs ist, wobei das Schutzelement (1, 6) eine Unterlage ist, die auf einer Innenfläche eines oberen Abschnitts der ersten Schwenktür (4) in einem eine Rückführung zu der Vorderseite des Fahrzeugs bildenden Bereich angeordnet ist, wobei die zweite Schwenktür (5) auf diesen Bereich auftreffen kann, wenn die erste Schwenktür (4) nicht vollständig geschlossen ist.

10. Verfahren zur Platzierung einer Anordnung eines Teils (1) an einem hohlen Element (2), wobei Letzteres eine erste Wand (21) und eine zweite Wand (22) aufweist, die im Wesentlichen parallel sind, wobei das Teil (1) mindestens einen zylindrischen Vorsprung (11) aus flexiblem Material aufweist, der eine Aussparung (12) zur Aufnahme eines Einrastzapfens (3) umschließt, wobei der Zapfen (3) aus einem im Vergleich zu dem flexiblen Material des Vorsprungs (11) starren Material ausgeführt ist, wobei die Platierung der Anordnung die folgenden aufeinanderfolgenden Schritte umfasst:
- der Zapfen (3) wird teilweise in der Aussparung (12) des Vorsprungs (11) in Eingriff gebracht,
- der Vorsprung (11) und der Zapfen (3) werden in eine Öffnng (211) der ersten Wand (21) eingeführt,
- der Zapfen (3) wird unter dem Einfluss des während des Einführens des Vorsprungs (11) in die Öffnung (211) von der zweiten Wand (22) auf den Zapfen (3) ausgeübten Schubs vollständig in der Aussparung (12) in Eingriff gebracht, wobei dieser vollständige Eingriff des Zapfens (3) eine radiale Dehnung des Vorsprungs (11) hervorruft, die sein Einhängen an dem Umfangsrand (212) der Öffnung (211) der ersten Wand (21) sicherstellt.

## Claims

1. Assembly of a part (1) on a hollow element (2), the latter comprising a first wall (21) and a second wall (22) that are substantially parallel, **characterized in that** the part (1) comprises at least one cylindrical protrusion (11) of flexible material that encloses a recess (12) for receiving a snap-fitting peg (3), the peg (3) being made of a material that is more rigid than the flexible material of the protrusion (11), the assembly being able to be transformed between, on one hand, an initial configuration in which the protrusion (11), with the peg (3) partially engaged in the recess (12), is inserted into an opening (211) of the first wall (21) and, on the other hand, a final configuration in which the peg (3) is fully engaged in the recess (211) under the influence of the thrust exerted by the second wall (22) on the peg (3) when the protrusion (11) is inserted into the opening (211), wherein the full engagement of the peg (3) in the recess (12) causes radial expansion of the protrusion (11), causing it to hook onto the rim (212) of the opening (211) in the first wall (21).

2. Assembly according to Claim 1, **characterized in that** the peg (3) comprises a main body (31) that is intended to be inserted into the recess (12) of the protrusion (11), and a head (32) whose rim is wider than the main body (31), the head (32) being designed to engage in abutment against an annular face of the protrusion (11) forming a rim of the recess (12).

3. Assembly according to Claim 2, **characterized in that** the main body (31) of the peg (3) comprises at least one peripheral relief (33), in particular two annular teeth that are designed to be inserted into two complementary notches created in the recess (12) of the protrusion (11).

4. Assembly according to Claim 2 or 3, **characterized in that** the main body (31) of the peg (3) has a shape of revolution whose radial dimension is generally decreasing from the head (32) of the peg (3) to an opposite free edge of the peg (3).

5. Assembly according to the preceding claim, **characterized in that** the general shape of the main body (31) of the peg (3) is frustoconical.

6. Assembly according to any one of the preceding claims, **characterized in that** the protrusion (11) comprises an external collar (13) that enhances the hooking of the protrusion (11) onto the peripheral edge (212) of the opening (211).

7. Assembly according to any one of the preceding claims, **characterized in that** the separation (E) between the first wall (21) and the second wall (22) is between 3 and 20 mm.

8. Bodywork part, in particular a swing door (4), of a motor vehicle, comprising a hollow part delimited by a first wall and a second wall that are substantially parallel, **characterized in that** it comprises a protection element (1, 6) attached to the bodywork part by an assembly according to any one of the preceding claims, the protection element comprising at least one protrusion (11) in which, in the final configuration, there is engaged a corresponding snap-fitting peg (3).

9. Motor vehicle, **characterized in that** it comprises a bodywork part according to Claim 8, the bodywork part being a first (4) of the two rear swing doors (4, 5) of the vehicle, the protection element (1, 6) being a pad located on an interior face of an upper part of the first swing door (4), in a region pointing back towards the front of the vehicle, this region being at risk of an impact from the second swing door (5) when the first swing door (4) is not completely closed.

10. Method for installing an assembly of a part (1) on a hollow element (2), the latter comprising a first wall (21) and a second wall (22) that are substantially parallel, the part (1) comprising at least one cylindrical protrusion (11) made of flexible material, enclosing a recess (12) for receiving a snap-fitting peg (3), the peg (3) being made of a material that is more rigid than the flexible material of the protrusion (11), the installation of the assembly comprising the following successive steps:
- partially engaging the peg (3) in the recess (12) of the protrusion (11);
- inserting the protrusion (11) together with the peg (3) into an opening (211) of the first wall (21) ;
- fully engaging the peg (3) in the recess (12) under the influence of the thrust exerted by the second wall (22) on the peg (3) when the protrusion (11) is inserted into the orifice (211), this full engagement of the peg (3) causing radial expansion of the protrusion (11), causing it to hook onto the rim (212) of the opening (211) of the first wall (21).
